# EUROPEAN PATENT SPECIFICATION

(11) **EP 4 164 377 B1**
(45) Date of publication and mention of the grant of the patent: **03.06.2026**
(21) Application number: 21731778.3
(22) Date of filing: 10.06.2021
(51) Int. Cl.: A01M 23/34, A01M 23/38

(54) **A RECHARGEABLE TRAP CONFIGURED FOR IDENTIFYING THE SPECIES OF ITS KILLS**
WIEDERAUFLADBARE FALLE ZUR IDENTIFIZIERUNG DER SPEZIES IHRER TÖTUNGEN
PIÈGE RECHARGEABLE CONÇU POUR IDENTIFIER L'ESPÈCE DES ANIMAUX QU'IL TUE

(30) Priority: 15.06.2020 DK PA202000700
(43) Date of publication of application: 19.04.2023
(73) Proprietor: Camro A/S, 9610 Nørager (DK)
(72) Inventor: SØRENSEN, Kurt, 9610 Nørager (DK)
(74) Representative: Larsen & Birkeholm A/S
(86) International application number: PCT/EP2021/065601
(87) International publication number: WO 2021/254864

(56) References cited:
- DE-U1- 202015 102 392
- US-A1- 2011 296 739
- US-A1- 2018 249 699

## Description

### Technical field of the invention

The present invention relates to rechargeable killing traps.

### Background of the invention

Urban environments provide suitable conditions for certain species of rodents, particularly Norway rats and house mice, to proliferate. Mice and rats generally pose a health hazard due to disease spreading. Rat urine per se presents an additional health hazard because of the potential presence of Leptospira spp., which can enter the blood through skin cuts causing the potentially fatal Weil's disease. In addition, presence of rats and mice often impose a significant economic cost through the potential destruction of building materials, such as wall and roof insulation, electrical wiring, packaging, and contaminating foods etc. Rats are much worse than mice in regard to both disease spreading and destruction of building materials. To devise and target efficient pest control strategies, it is essential to have a reliable and sensitive method of identifying the presence and location of rats and mice in the environment and of identifying the species concerned.

Conventional methods of detection rely on an infestation reaching large enough proportions to show physical signs, the presence of faeces and signs of gnawing damage are the most commonly used. Whilst such signs can be reliable, they usually identify an infestation that is well established, which will be difficult to eradicate and could already have caused much damage. Small numbers of rats and mice will not always leave such obvious signs in visible sites. Droppings from mice are often difficult to spot, while those from rats are usually located in small numbers of latrine sites. Therefore, whilst such methods can be reliable for detecting large scale infestations, they are usually inadequate for detecting the presence of rodents at a low level. Relevant state of the art documents in this field are for example: US 2018/249699 A1 and DE 20 2015 102392 U1.

### Object of the Invention

The objective of the present invention is to provide an automatic rechargeable trap suitable for use in a system for detecting and predicting rats and mice infestations, or other target animal infestations, which alleviates or mitigates the disadvantages associated with prior art methods.

### Description of the Invention

A first aspect of the present invention relates to the use of vibration and/or shock data measured in a rechargeable trap according to claim 1.

A second aspect relates to a rechargeable trap, preferably automatic, comprising:
i) a spring driven and/or gas pressure driven killing means; and
ii) a target species monitoring unit configured for determining the type of target species killed by said killing means by measuring the vibration and/or shock that is created by said killing means, when triggered, upon impact with a target animal, and comparing data representing said measured vibration and/or shock with previously measured vibration and/or shock data for said killing means' impact with specific target animals.

Mechanical traps are characterised by killing means that strikes the target animal and almost instantly kills it. The killing means in mechanical traps are normally spring driven or gas pressure driven and may be recharged by electrical means or gas pressure driven means.

The target species monitoring unit is configured for determining the type of target species that is killed by the killing means. This is performed by measuring the vibration and/or shock that is created by said killing means, when triggered, upon impact with a target animal. In the present context, vibration is the mechanical phenomenon of oscillations which occur about an equilibrium point, while shock is an impulse applied to a system. It is a sudden acceleration. If a target animal has activated the killing means, the killing means, e.g. in the form of a piston and/or a spear, will set into motion towards the target animal. When striking the target animal, the killing means will stop its motion and the kinetic energy will be transformed into other types of energy, some of which are absorbed by the killed target animal. Depending on the size of the target animal, this absorption may vary. Other fractions of the energy will be absorbed by the retraction mechanism, e.g. a spring, while again other fractions will be absorbed by other components of the trap, such as the housing. As the energy absorbed by the target animal is proportional to its size, it is possible to measure its size by indirectly measuring fractions of absorbed energy in the trap, as these fractions are also proportional to the size of the target animal, since the target animal can be seen as a vibration and/or shock damper. Hence, this method of distinguishing between e.g. mice and rats is simple and reliable.

The information collected by an individual trap may be extracted and used in analysing the target animal activity, such as rat and/or mice activity, in a selected geographical area, in which several traps are positioned. The trap may comprise a transmitter, a transceiver, a readable chip or the like adapted to make this information available to a user.

The target species monitoring unit preferably comprises one or more accelerometers. The term "accelerometer" refers to any suitable device that measures proper acceleration and/or deacceleration, which may be described as the acceleration or deacceleration relative to free fall or the acceleration or deacceleration experienced by people or objects. The accelerometer is used to measure the shock or vibration at the position where they are mounted, which is a parameter that indirectly indicate the size of the killed animal. The larger the shock or vibration, the smaller the killed target animal. The accelerometer is preferably an electromechanical device that senses dynamic forces of acceleration and/or deacceleration, including vibrations and movement. Said accelerometer may measure acceleration and/or deacceleration on one, two, or three axes, preferably three axes. Using accelerometers with three axes rather than one or two axes provides a more accurate, but complex, footprint of the energy (vibration and/or shock) distribution, making it possible to minimize falls kills, if e.g. a trap is dropped or kicked during service or use. The accelerometers may contain capacitive plates internally, some of which are fixed, while others are attached to minuscule springs that move internally as acceleration forces act upon the sensor. As these plates move in relation to each other, the capacitance between them changes. From these changes in capacitance, the acceleration and/or deceleration can be determined. Other types of accelerometers may be centred around piezoelectric materials. These tiny crystal structures output electrical charge when placed under mechanical stress, such as acceleration or deacceleration.

The target species monitoring unit may comprise an electronic memory configured to store data from the one or more accelerometers corresponding to the detected vibration or shock when the detected vibration or shock exceeds an active threshold of the accelerometer. The accelerometer may include a first threshold for vibration or shock detection during transportation and/or service of the trap and a second threshold for vibration or shock detection when the trap is stationary, e.g. during normal use. The trap may include an interface circuitry configured to interface with an external device, such as a handheld computer, e.g. a smartphone, in order to select one of the first and second thresholds as the active threshold. In one or more embodiments, the target species monitoring comprises a real-time clock circuit configured to output a time stamp, and the data from the accelerometer is stored in the electronic memory in association with a corresponding time stamp.

The electronic memory may be an electrically erasable programmable read only memory (EEPROM). The power supply of the target species monitoring unit may preferably be independent of a power supply of the killing means.

In one or more embodiments, the rechargeable trap further comprises a kill monitoring means configured for determining the number of kills by monitoring the number of triggering of the killing means. The kill monitoring means should simply be able to detect each time the killing means is activated. The kill monitoring means could be embodied as e.g. a shock sensor, or a motion sensor.

In one or more embodiments, the rechargeable trap further comprises a transmitter unit configured for receiving monitoring data from the species monitoring means and/or from the kill monitoring means and configured for transmitting the received monitoring data. The transmitter unit is configured for receiving monitoring data from the species monitoring means and from the kill monitoring means and configured for transmitting the received monitoring data. The signal may be transmitted by e.g. satellite, 4G, 3G, 5G, radio link, GSM, LTE, UMTS and/or through an internet-of-things (IoT) network.

In one or more embodiments, the rechargeable trap further comprises a housing with a rat and mouse entry opening positioned in the side wall and/or in the bottom wall; and wherein the spring driven and/or gas pressure driven killing means is positioned at a level above the level of the rat and/or mouse entry opening, such that a rat or mouse can reach the killing means when standing within the housing on their hind legs.

In one or more embodiments, the rechargeable trap further comprises a counter configured for calculating the number of rats and mice killed by said killing means during a period of time.

In one or more embodiments, the rechargeable trap further comprises kill monitoring means configured for determining the number of kills by monitoring the number of triggering of the killing means.

In one or more embodiments, the rechargeable trap further comprises a transmitter unit configured for receiving monitoring data from the species monitoring unit and/or from the kill monitoring means and configured for transmitting the received monitoring data.

In one or more embodiments, the rechargeable trap further comprises a housing with a rat and mouse entry opening, preferably positioned in the side wall and/or in the bottom wall. The spring driven and/or gas pressure driven killing means is preferably positioned at a level above the level of the rat and/or mouse entry opening, such that a rat or mouse can reach the killing means when standing within the housing on their hind legs.

In general, the spring driven and/or gas pressure driven killing means preferably comprises a piston and/or spear.

In one or more embodiments, the identification comprises comparing data representing said measured vibration and/or shock with previously measured vibration and/or shock data for said killing means' impact with specific target animals.

In one or more embodiments, the previously measured data are measured in a trap with a killing means that is identical to the one in said rechargeable trap.

In one or more embodiments, the previously measured data are measured in an identical trap to said rechargeable trap.

In one or more embodiments, the vibration and/or shock data are measured and generated with one or more accelerometers.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 is a cross-sectional view of a trap in accordance with various embodiments of the invention;

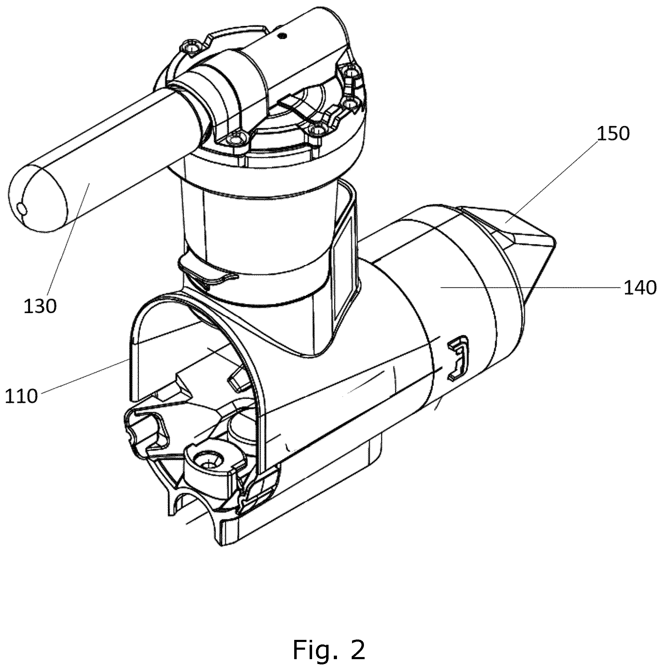

Figure 2 is a perspective of a trap in accordance with various embodiments of the invention;
Figure 3 is an exemplary circuit of an accelerometer.

### References

- 100: Trap
- 110: Entrance
- 120: Trigger rod
- 130: Gas tank
- 140: Lure and/or bait chamber
- 142: Container/insert
- 150: Control unit
- 151: Housing
- 152: NFC device
- 153: Flange
- 154: Antenna
- 155: Accelerometer
- 156: Battery
- 160: Spring
- 170: Kill zone chamber
- 180: Piston or spear

### Detailed Description of the Invention

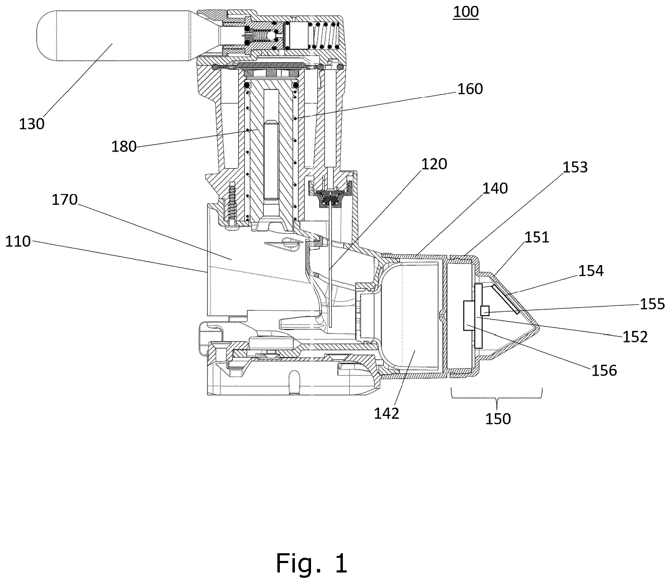

Figure 1 is a cross-sectional view of a trap in accordance with various embodiments of the invention. The trap 100 is here shown with a killing means in the form of a piston/spear 180. The piston 180 is both gas and spring driven. The spring 160 retains the piston 180 in a retracted position before a triggering. When triggered, the forces (increased pressure) from the released gas drives the piston or spear 180 forward, thereby forcing the spring 160 to extend. The increased gas pressure behind the piston 180 is then reduced, e.g. through a valve, and the spring 160 can then retract. The gas tank 130 and the spring 160 are shown. The piston 180 is shown in a retracted position and is activated by the trigger rod 120 (trigger mechanism). The piston 180 is preferably made from a polymeric material that is preferably injection mouldable, such as plastic, e.g. polyethylene, polyoxymethylene, or polyethylene. The piston 180 could though be made of metal, such as steel or the like. The trap 100 also comprises a housing with an entrance 110 leading to a kill zone chamber 170, wherein, in this embodiment, the trigger rod 120 is positioned. The kill zone chamber 170 is where the target animal is killed. A detachable lure and/or bait chamber 140 is directly connected to the kill zone chamber 170. A container 142 for lure and/or bait may be seen positioned within the lumen of the lure and/or bait chamber 140. A control unit 150 is shown attached to the lure and/or bait chamber 140. The control unit 150 comprises an accelerometer 155 in the form of an electromechanical device that senses dynamic forces of acceleration and deacceleration, including vibrations and movement. The acceleration and deacceleration is measured on three axes. Triple axis accelerometers are well-know within the art of accelerometers. The control unit 150 comprises a battery 156 driven wireless near-field communication device 152 with an antenna 154.

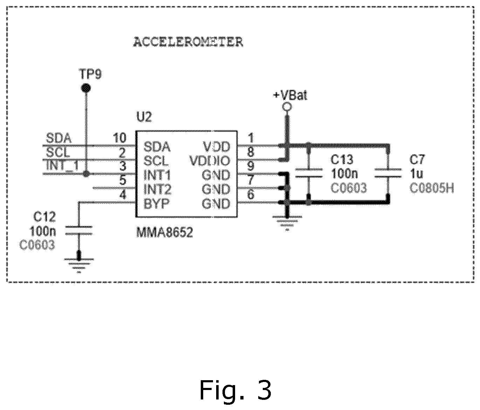

Figure 3 is an exemplary circuit of an accelerometer. The control unit 150 may of course be provided with another means for sending and receiving information, e.g. means adapted for transmitting via 4G, 3G, 5G, radio link, GSM, LTE, UMTS and/or through an internet-of-things (IoT) network.

## Claims

1. Use of vibration and/or shock data measured in a rechargeable trap during activation of the trap's killing means to identify the size and/or species of a target animal killed during said activation; wherein said identification comprises comparing data representing said measured vibration and/or shock with previously measured vibration and/or shock data for said killing means' impact with specific target animals.

2. Use according to claim 1, wherein said previously measured data are measured in a trap with a killing means that is identical to the one in said rechargeable trap.

3. Use according to claim 1, wherein said previously measured data are measured in an identical trap to said rechargeable trap.

4. Use according to any one of the claims 1-3, wherein said vibration and/or shock data are measured and generated with one or more accelerometers.

5. Use according to claim 4, wherein both acceleration and deacceleration are measured with said one or more accelerometers to generate said vibration and/or shock data.

6. An automatic rechargeable trap (100) comprising:
i) a spring driven and/or gas pressure driven killing means;
**characterized in that** the trap (100) further comprises:
ii) a target species monitoring unit configured for determining the type of target species killed by said killing means by measuring the vibration and/or shock that is created by said killing means, when triggered, upon impact with a target animal, and comparing data representing said measured vibration and/or shock with previously measured vibration and/or shock data for said killing means' impact with specific target animals.

7. The automatic rechargeable trap (100) according to claim 6, wherein said target species monitoring unit (300) comprises one or more accelerometers.

8. The automatic rechargeable trap (100) according to any one of the claims 7-8, wherein the target species monitoring unit comprises an electronic memory configured to store data from the one or more accelerometers corresponding to the detected vibration or shock when the detected vibration or shock exceeds a predefined threshold of the accelerometer.

9. The automatic rechargeable trap (100) according to claim 8, wherein said one or more accelerometers include a first threshold for vibration or shock detection during transportation and/or service of said trap (100) and a second threshold for vibration or shock detection when said trap is stationary, e.g., during normal use.

## Patentansprüche

1. Verwendung von Vibrations- und/oder Stoßdaten, die in einer wiederaufladbaren Falle während der Aktivierung des Tötungsmittels der Falle gemessen werden, um die Größe und/oder Spezies eines Zieltieres zu identifizieren, das während der besagten Aktivierung getötet wurde; wobei die Identifizierung das Vergleichen von Daten, die die gemessene Vibration und/oder den Stoß repräsentieren, mit zuvor gemessenen Vibrations- und/oder Stoßdaten für den Aufprall des Tötungsmittels auf spezifische Zieltiere umfasst.

2. Verwendung nach Anspruch 1, wobei die zuvor gemessenen Daten in einer Falle mit einem Tötungsmittel gemessen werden, das mit dem in der wiederaufladbaren Falle identisch ist.

3. Verwendung nach Anspruch 1, wobei die zuvor gemessenen Daten in einer zur wiederaufladbaren Falle identischen Falle gemessen werden.

4. Verwendung nach einem der Ansprüche 1-3, wobei die Vibrations- und/oder Stoßdaten mit einem oder mehreren Beschleunigungsmessern gemessen und erzeugt werden.

5. Verwendung nach Anspruch 4, wobei sowohl Beschleunigung als auch Verzögerung mit dem einen oder den mehreren Beschleunigungsmessern gemessen werden, um die Vibrations- und/oder Stoßdaten zu erzeugen.

6. Automatische wiederaufladbare Falle (100), umfassend:
i) ein federgetriebenes und/oder gasdruckgetriebenes Tötungsmittel;
**dadurch gekennzeichnet, dass** die Falle (100) ferner umfasst:
ii) eine Zielspezies-Überwachungseinheit, die zum Bestimmen der Art der durch das Tötungsmittel getöteten Zielspezies konfiguriert ist, durch Messen der Vibration und/oder des Stoßes, die/der durch das Tötungsmittel beim Auslösen beim Aufprall auf ein Zieltier erzeugt wird, und Vergleichen von Daten, die die gemessene Vibration und/oder den Stoß repräsentieren, mit zuvor gemessenen Vibrations- und/oder Stoßdaten für den Aufprall des Tötungsmittels auf spezifische Zieltiere.

7. Automatische wiederaufladbare Falle (100) nach Anspruch 6, wobei die Zielspezies-Überwachungseinheit (300) einen oder mehrere Beschleunigungsmesser umfasst.

8. Automatische wiederaufladbare Falle (100) nach einem der Ansprüche 7-8, wobei die Zielspezies-Überwachungseinheit einen elektronischen Speicher umfasst, der konfiguriert ist, um Daten von dem einen oder den mehreren Beschleunigungsmessern zu speichern, die der detektierten Vibration oder dem detektierten Stoß entsprechen, wenn die detektierte Vibration oder der detektierte Stoß einen vordefinierten Schwellenwert des Beschleunigungsmessers überschreitet.

9. Automatische wiederaufladbare Falle (100) nach Anspruch 8, wobei der eine oder die mehreren Beschleunigungsmesser einen ersten Schwellenwert für die Vibrations- oder Stoßdetektion während des Transports und/oder der Wartung der Falle (100) und einen zweiten Schwellenwert für die Vibrations- oder Stoßdetektion aufweisen, wenn die Falle stationär ist, z. B. während des normalen Gebrauchs.

## Revendications

1. Utilisation de données de vibrations et/ou de chocs mesurées dans un piège rechargeable lors de l'activation du moyen de mise à mort du piège pour identifier la taille et/ou l'espèce d'un animal cible tué lors de ladite activation ; dans laquelle ladite identification comprend la comparaison de données représentant lesdites vibrations et/ou chocs mesurés avec des données de vibrations et/ou de chocs précédemment mesurées pour l'impact dudit moyen de mise à mort sur des animaux cibles spécifiques.

2. Utilisation selon la revendication 1, dans laquelle lesdites données précédemment mesurées sont mesurées dans un piège doté d'un moyen de mise à mort identique à celui dudit piège rechargeable.

3. Utilisation selon la revendication 1, dans laquelle lesdites données précédemment mesurées sont mesurées dans un piège identique audit piège rechargeable.

4. Utilisation selon l'une quelconque des revendications 1 à 3, dans laquelle lesdites données de vibrations et/ou de chocs sont mesurées et générées avec un ou plusieurs accéléromètres.

5. Utilisation selon la revendication 4, dans laquelle l'accélération et la décélération sont mesurées avec lesdits un ou plusieurs accéléromètres pour générer lesdites données de vibrations et/ou de chocs.

6. Piège automatique rechargeable (100) comprenant :
i) un moyen de mise à mort actionné par ressort et/ou par pression de gaz ;
**caractérisé en ce que** le piège (100) comprend en outre :
ii) une unité de surveillance des espèces cibles configurée pour déterminer le type d'espèce cible tuée par ledit moyen de mise à mort en mesurant les vibrations et/ou chocs créés par ledit moyen de mise à mort, lorsqu'il est déclenché et impacte un animal cible, et en comparant les données représentant lesdites vibrations et/ou chocs mesurés avec les données de vibrations et/ou de chocs précédemment mesurées pour l'impact dudit moyen de mise à mort sur des animaux cibles spécifiques.

7. Piège rechargeable automatique (100) selon la revendication 6, dans lequel ladite unité de surveillance des espèces cibles (300) comprend un ou plusieurs accéléromètres.

8. Piège rechargeable automatique (100) selon l'une quelconque des revendications 7 et 8, dans lequel l'unité de surveillance des espèces cibles comprend une mémoire électronique configurée pour stocker des données provenant d'un ou plusieurs accéléromètres correspondant aux vibrations ou aux chocs détectés lorsque les vibrations ou les chocs détectés dépassent un seuil prédéfini de l'accéléromètre.

9. Piège rechargeable automatique (100) selon la revendication 8, dans lequel lesdits un ou plusieurs accéléromètres comportent un premier seuil de détection des vibrations ou des chocs pendant le transport et/ou l'entretien dudit piège (100) et un second seuil de détection des vibrations ou des chocs lorsque ledit piège est stationnaire, par exemple, pendant une utilisation normale.
